# EUROPÄISCHE PATENTSCHRIFT

(11) **EP 3 964 539 B1**
(45) Veröffentlichungstag und Bekanntmachung des Hinweises auf die Patenterteilung: **25.06.2025**
(21) Anmeldenummer: 20194392.5
(22) Anmeldetag: 03.09.2020
(51) Int. Cl.: C08J 3/22

(54) **MASTERBATCH UND VERWENDUNG DES MASTERBATCHES, POLYMERWERKSTOFFE, ENTHALTEND DEN MASTERBATCH, SOWIE FORMKÖRPER, ERHALTEN AUS DEM POLYMERWERKSTOFF**
MASTERBATCH AND USE OF THE MASTERBATCH, POLYMER MATERIALS CONTAINING THE MASTERBATCH, AND MOULDS OBTAINED FROM THE POLYMER MATERIAL
MÉLANGE MAÎTRE ET UTILISATION DU MÉLANGE MAÎTRE, MATIÈRES POLYMÈRES CONTENANT LE MÉLANGE MAÎTRE AINSI QUE CORPS MOULÉ OBTENU À PARTIR DE LA MATIÈRE POLYMÈRE

(43) Veröffentlichungstag der Anmeldung: 09.03.2022
(73) Patentinhaber: DAW SE, 64372 Ober-Ramstadt (DE)
(72) Erfinder: RÖBER, Friedhelm, 04668 Grimma (DE); HÜBNER, Matthias, 04416 Markkleeberg (DE)
(74) Vertreter: Metten, Karl-Heinz

(56) Entgegenhaltungen:
- EP-A1- 2 113 522
- EP-A1- 3 118 245
- WO-A1-2018/091104

## Beschreibung

Die vorliegende Erfindung betrifft einen Masterbatch, insbesondere in Granulat-Form. Außerdem betrifft die Erfindung die Verwendung des erfindungsgemäßen Masterbatches zur Einfärbung von Polymerwerkstoffen und Formkörpern. Auch betrifft die Erfindung Polymerwerkstoff, enthaltend den erfindungsgemäßen Masterbatch in einer Mindermenge. Schließlich betrifft die Erfindung Formkörper, erhalten oder erhältlich aus dem erfindungsgemäßen Polymerwerkstoff.

Masterbatches werden regelmäßig zur anwendungsspezifischen Modifizierung von Kunststoffen eingesetzt. Masterbatches stellen polymergebundene Additivkonzentrate dar. Der Vorteil von Masterbatches ist, dass sie regelmäßig nur in relativ geringen Mengen einem Polymerwerkstoff beigemischt werden müssen, um die gewünschte Einfärbung bzw. Modifizierung herbeizuführen.

Grundsätzlich können zwei Klassifizierungssysteme für die Einteilung von Masterbatches verwandt werden. Zum einen können Masterbatches eingeteilt werden in Farb-, Additiv- und Kombinationsmasterbatches. Diese Einteilung ist funktionsorientiert. Zum anderen können Masterbatches mit Blick auf das polymere Matrixmaterial, in das diese Masterbatches eingemischt werden, unterteilt werden in universale und polymerspezifische Masterbatches. Aufgrund von Kompatibilitätsproblemen, die auf die teilweise Unverträglichkeit der Polymere zurückzuführen sind, welche einerseits für den Masterbatch und andererseits für das polymere Matrixmaterial verwendet werden, und in Entmischungsphänomenen und Dispergierfehlern resultieren, sind universale Masterbatches für viele Anwendungen noch stets problematisch, obgleich universale Masterbatches unter Lager- und Logistikaspekten durchaus ein erhebliches Rationalisierungspotenzial mit sich bringen. Gegenwärtig gibt es für jede Kunststoffklasse eine Vielzahl an speziellen Masterbatchtypen. Der erfolgreiche Einsatz von Masterbatches hat seine Ursache auch darin, dass feststoffbasierte Additive in Masterbatchpräparationen vollständig oder nahezu vollständig dispergiert vorliegen können. Hiermit geht einher, dass das dispersive Mischen zum Aufbrechen und Zerteilen von Agglomeraten und Aggregaten bei der Herstellung von Kunststoffwerkstoffen kaum erforderlich ist. Demgemäß sind in der Regel beim Einmischen von Masterbatches in polymere Matrixmaterialien keine zusätzlichen Dispergierhilfsmittel zuzugeben. Zwar wird regelmäßig angestrebt, Masterbatches in Form von Granulaten zu erhalten, die gut rieselfähig und staubfrei sind. Nicht selten erhält man jedoch Masterbatchpartikel von klebriger Konsistenz.

Masterbatches werden im Allgemeinen nach einem einstufigen oder einem zweistufigen Verfahren hergestellt. Bei der einstufigen Fertigung werden alle Rohstoffkomponenten vorgelegt und extrudiert. Bei der zweistufigen Variante werden zunächst sogenannte Monokonzentrate hergestellt, die anschließend nochmals gemischt und gegebenenfalls mit Additiven versehen und extrudiert werden. Die Homogenität des Farbtons im Kunststoff hängt davon ab, welches Fließverhalten in der Schmelze erreicht wird bzw. wie gut sich der Masterbatch in der Matrix verteilt. Vielfach gelingt es nicht oder nur in unzureichendem Umfang, Pigmente unter Erhalt einer homogenen Einfärbung in einen Masterbatch einzuarbeiten. Beispielsweise sind durch trockene Calcinierung hergestellte Pigmente regelmäßig nur unter hohem Energieeintrag und zudem meist nur unvollständig in einem Masterbatches verteilbar. Man spricht hier auch von sogenannten dispergierharten Pigmenten. Die bekannten Masterbatche, insbesondere auch silikonbasierte Masterbatche, sind noch stets mit Problemen behaftet und lassen Wünsche offen. Beispielsweise neigen Masterbatche in Granulatform häufig zum Verkleben oder Verblocken selbst bei hohen Füllgraden.

Die EP 2 113 522 A1 betrifft ein Verfahren zur Herstellung eines Farb-Masterbatches mit den Schritten:
a) Mischen einer mit einer Amino-, Hydroxy- oder Carboxy-Gruppe terminierten Siloxanstruktur der allgemeinen Formel I (Komponente A): 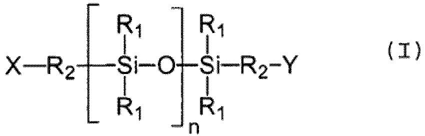 mit
   R1 unabhängig voneinander ein einwertiger Kohlenwasserstoffrest mit 1 bis 20 Kohlenstoffatomen,
   R2 unabhängig voneinander ein Alkylenrest mit 1 bis 20 Kohlenstoffatomen, in dem einander nicht benachbarte Methyleneinheiten durch Gruppen -O- ersetzt sein können, oder einen Arylenrest mit 6 bis 22 Kohlenstoffatomen,
   X und Y unabhängig voneinander eine Hydroxy-, Carboxy- oder Amino-Gruppe -NR'- mit R' = Wasserstoff, Alkylrest mit 1 bis 10 Kohlenstoffatomen oder Arylrest mit 6 bis 22 Kohlenstoffatomen und
   n eine Zahl von 1 bis 10000,
   mit mindestens einer bifunktionellen Verbindung (Komponente B), die zwei, mit X und Y durch Polyaddition oder Polykondensation verknüpfbare Gruppen aufweist,
b) Polymerbildung der Mischung der Komponenten A und B sowie
c) Aufschmelzen des Polymerisats im Extruder oder diskontinuierlichen Innenmischer mit anschließender Granulation,
wobei vor Abschluss der Polymerbildung mindestens ein Farbmittel zugesetzt wird. Dieses Verfahren soll sehr effizient sein und Farb-Masterbatche liefern, die sich durch hohe Kompatibilität gegenüber zugesetzten Farbmitteln und deren eingesetzten Mengen auszeichnen.

Mit der EP 3 118 245 A1 wird abgestellt auf ein Verfahren zur Herstellung eines Masterbatches, umfassend die Schritte:
a1) Zurverfügungstellung einer mit mindestens einer Amino-, Hydroxy-, Carboxy-, Carboxylat-, Carbonsäureester- oder Carbonsäureanhydrid-Gruppen terminierten Siloxanverbindung der allgemeinen Formel (Komponente A1): 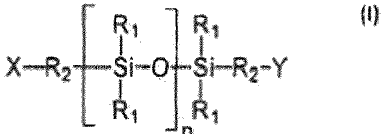 mit
   R1 unabhängig voneinander ein einwertiger Kohlenwasserstoffrest mit 1 bis 20 Kohlenstoffatomen,
   R2 unabhängig voneinander ein Alkylenrest mit 1 bis 20 Kohlenstoffatomen, in dem einander nicht benachbarte Methyleneinheiten durch Gruppen -O- ersetzt sein können, oder ein Arylenrest mit 6 bis 22 Kohlenstoffatomen,
   X, Y unabhängig voneinander eine Hydroxy-, Carboxy-, Carboxylat-, Carbonsäureester-, Carbonsäureanhydrid- oder Amino-Gruppe NHR' mit R' = Wasserstoff, Alkylrest mit 1 bis 10 Kohlenstoffatomen oder Arylrest mit 6 bis 22 Kohlenstoffatomen, und
   n eine Zahl von 75 bis 215;
a2) Zurverfügungstellung einer mindestens bifunktionellen Verbindung (Komponente A2) die zwei oder mehr, mit X und Y, insbesondere durch Polyaddition oder Polykondensation, verknüpfbare Gruppen aufweist;
a3) Zurverfügungstellung eines Farbmittels (Komponente A3) und/oder
a4) Zurverfügungstellung eines Funktionsadditivs (Komponente A4);
b) Mischen der Komponenten gemäß a1), a2) und a3) oder gemäß a1), a2) und a4) oder gemäß a1), a2), a3) und a4);
c) Polymerbildung der Mischung gemäß b) und
d) Aufschmelzen und/oder Schmelzeflüssighalten des in Schritt c) gebildeten Polymerisats und
e) Überführen des Polymerisats gemäß Schritt d) in einen festen Aggregatzustand.

Mit diesem Verfahren soll ein wirtschaftlicher und zuverlässiger Zugang zu sogenannten universalen Masterbatches ermöglicht werden, die weder bei der Verarbeitung im Extruder noch bei der Einarbeitung in polymere Matrixmaterialien und auch nicht bei der Weiterverarbeitung der schmelzeflüssigen Polymerwerkstoffe in beispielsweise Spritzgießmaschinen zu signifikanten Ablagerungen führen.

Der vorliegenden Erfindung lag demgemäß die Aufgabe zugrunde, Masterbatche zur Verfügung zu stellen, die nicht mehr mit den Nachteilen des Stands der Technik behaftet sind und die insbesondere Formkörper ermöglichen, die sich durch eine verringerte Wasseraufnahme auszeichnen, und/oder die Polymerwerkstoffe liefern, die bei der Herstellung von Formkörpern keine oder nur noch eine verringerte Menge an Ausschussware liefern. Insbesondere lag der Erfindung auch die Aufgabe zugrunde, Masterbatche zur Verfügung zu stellen, die, selbst wenn sie Naturfasern oder Füllstoffe organischen Ursprungs wie Holzmehl oder Holzfasern enthalten, Formkörper ermöglichen, die sich durch eine verringerte Wasseraufnahme auszeichnen.

Demgemäß wurde ein Masterbatch gefunden, insbesondere in Granulat-Form, bestehend aus oder enthaltend, insbesondere enthaltend,
a) mindestens ein Silizium-haltiges Blockcopolymer A),
b) mindestens ein anorganisches Pigment und/oder einen anorganischen Füllstoff B), insbesondere mindestens ein anorganisches Pigment, und
c) mindestens ein Polymer C) ausgewählt aus der Gruppe bestehend aus thermoplastischen Polymeren, ausgewählt aus der Gruppe bestehend aus Polyolefin-Homo- und -Copolymeren, Polyestern, Polyvinylchlorid und beliebigen Mischungen hiervon, thermoplastischen Elastomeren, umfassend oder darstellend thermoplastische Polyurethanelastomere, oder Mischungen hiervon, insbesondere mindestens ein thermoplastisches Polymer.

In besonders zweckmäßigen Ausgestaltungen ist vorgesehen, dass das Gewichtsverhältnis des mindestens einen Silizium-haltigen Blockcopolymers A) zu dem mindestens einen Polymer C), insbesondere dem mindestens einen thermoplastischen Polymer, im Bereich von 1:9 bis 9:1, bevorzugt im Bereich von 1:7 bis 1:2 und besonders bevorzugt im Bereich von 1:6 bis 1:3 liegt. Ein besonderer Vorteil, der mit den erfindungsgemäßen Masterbatches einhergeht, liegt auch darin, dass es nicht zwingend notwendig ist, dass das Polymer C) identisch mit dem Matrixpolymer des Polymerwerkstoffs, enthaltend diesen Masterbatch, zu sein hat. Durch die gleichzeitig Anwesenheit des mindestens einen Silizium-haltigen Blockcopolymers A) und des mindestens einen anorganischen Pigments und/oder des mindestens einen anorganischen Füllstoffs gelingt es, eine Mischung von unterschiedlichen Polymeren zu erhalten, die nicht zur Entmischung neigt. obwohl diese Polymere als binäre Mischung nicht homogen mischbar sind.

In besonders bevorzugten Ausführungsformen ist in den erfindungsgemäßen Masterbatches
a) das mindestens eine Silizium-haltige Blockcopolymer A) in einer Menge kleiner 10 Gew.-%, bezogen auf das Gesamtgewicht des Masterbatches,
b) das mindestens eine anorganische Pigment und/oder den einen anorganischen Füllstoff B), insbesondere mindestens das eine anorganische Pigment, in einer Menge kleiner oder gleich 80 Gew.-%, bevorzugt im Bereich von 55 bis 78 Gew.-%, jeweils bezogen auf das Gesamtgewicht des Masterbatches, und/oder, insbesondere und,
c) das mindestens eine Polymer C), insbesondere das mindestens eine thermoplastische Polymer, in einer Menge kleiner oder gleich 35 Gew.-%, bevorzugt im Bereich von 5 bis 28 Gew.-%, jeweils bezogen auf das Gesamtgewicht des Masterbatches, vorliegen,
   wobei die den Masterbatch bildenden Komponenten sich jeweils zu 100,0 Gew.-% addieren.

Insbesondere sind auch solche erfindungsgemäßen Masterbatche bevorzugt, bei denen
a) das mindestens eine Silizium-haltige Blockcopolymer A) in einer Menge kleiner 10 Gew.-%, bezogen auf das Gesamtgewicht des Masterbatches,
b) das mindestens eine anorganische Pigment in einer Menge im Bereich von 55 bis 78 Gew.-%, bezogen auf das Gesamtgewicht des Masterbatches, und
c) das mindestens eine thermoplastische Polymer C) in einer Menge im Bereich von 5 bis 28 Gew.-%, bezogen auf das Gesamtgewicht des Masterbatches, vorliegen,
wobei die den Masterbatch bildenden Komponenten sich jeweils zu 100,0 Gew.-% addieren.

Die erfindungsgemäßen Masterbatche können ferner mit d) mindestens einem Funktionsadditiv und/oder mit e) mindestens einem paraffinische Öl, insbesondere Weißöl, ausgestattet sein.

In ganz besonders bevorzugten Masterbatches ist vorgesehen, dass
das mindestens eine Silizium-haltige Blockcopolymer A) ausgewählt ist aus der Gruppe bestehend aus
i) einem ersten Blockcopolymer A1) mit der allgemeinen Formel (I)

   B-[R₂-(O-Si(R₁)₂)ₙ-O-Si(R₁)₂-R₂-NH-CO-NH-R₃-NH-CO-NH]ₐ-B'

   mit
   - R1: unabhängig voneinander ein einwertiger gegebenenfalls durch Fluor oder Chlor substituierter Kohlenwasserstoffrest mit 1 bis 20 Kohlenstoffatomen,
   - R2: - unabhängig voneinander - ein Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
   - R3: ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
   - B, B': eine reaktive oder nicht reaktive Endgruppe, welche kovalent an das Polymer gebunden ist,
   - n:: eine Zahl von 1 bis 10000, bevorzugt im Bereich von 75 bis 215, besonders bevorzugt im Bereich von 80 bis 200 und insbesondere im Bereich von 100 bis 180 oder 110 bis 160, und
   - a:: eine Zahl von mindestens 1, bevorzugt im Bereich von oder zwischen 1 bis 140, besonders bevorzugt im Bereich von 5 bis 100 und ferner bevorzugt im Bereich von 10 bis 50;
ii) einem zweiten Blockcopolymer A2) mit der allgemeinen Formel (II)

   B-[R²-(O-Si(R¹)₂)ₙ-O-Si(R¹)₂-R²-NH-CO-NH-R³-NH-CO-V-R⁴-W-CO-NH-R³-NH-CO-NH]ₐ-B'

   mit
   - R1: unabhängig voneinander ein einwertiger gegebenenfalls durch Fluor oder Chlor substituierter Kohlenwasserstoffrest mit 1 bis 20 Kohlenstoffatomen,
   - R2: - unabhängig voneinander - ein Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
   - R3: ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
   - R4: ein gegebenenfalls durch Fluor, Chlor, C1-C6-Alkyl- oder C1-C6-Alkylester substituierter Alkylenrest mit 1 bis 700 C-Atomen, in dem einander nicht benachbarte Methyleneinheiten durch Gruppen -O-, - COO-, -OCO-oder -OCOO- ersetzt sein können,
   - V, W: unabhängig voneinander -O- oder -NR5-, wobei R5 Wasserstoff, ein Alkylrest mit 1 bis 10 C-Atomen oder ein Arylrest mit 6 bis 22 C-Atomen ist,
   - B, B':: eine reaktive oder nicht reaktive Endgruppe, welche kovalent an das Polymer gebunden ist,
   - n:: eine Zahl von 1 bis 10000, bevorzugt im Bereich von 75 bis 215, besonders bevorzugt im Bereich von 80 bis 200 und insbesondere von 100 bis 180 oder 110 bis 160,
   - a:: eine Zahl von mindestens 1, bevorzugt im Bereich von oder zwischen 1 bis 140, besonders bevorzugt im Bereich von 5 bis 100 und ferner bevorzugt im Bereich von 10 bis 50,
   und
iii) beliebigen Mischungen der Blockcopolymere A1) und A2).

Bei den Endgruppen B und B' kann es sich um reaktive oder nicht reaktive Endgruppen handeln. Hierbei ist es möglich, dass beide Endgruppen B und B' nicht reaktive Endgruppen darstellen oder dass beide Endgruppen B und B' reaktive Endgruppen darstellen. Ferner kann es sich bei der einen Endgruppe B um eine reaktive Endgruppe und bei der anderen Endgruppe B' um eine nicht reaktive Endgruppe handeln. Demgemäß ist es möglich, dass die Endgruppen B und B' gleich oder verschieden sein können. In einer bevorzugten Ausführungsform kann in der Verbindung (I) oder in der Verbindung (II) die Endgruppe B eine Hydroxy-, Carboxy-, Carboxylat-, Carbonsäureester-, Carbonsäureanhydridgruppe oder eine Amino-Gruppe NHR' mit R' = Wasserstoff, Alkylrest mit 1 bis 10 Kohlenstoffatomen, insbesondere Methyl, Ethyl oder i- oder n-Propyl, vorzugsweise n-Propyl, oder Arylrest mit 6 bis 22 Kohlenstoffatomen, darstellen, wobei eine NH2-Gruppe besonders bevorzugt ist. In einer weiteren bevorzugten Ausführungsform kann in der Verbindung (I) oder der Verbindung (II) die Endgruppe B' eine NCO-Gruppe oder ein -CO-NH-R 3-NH2-Rest darstellen.

In einer weiteren bevorzugten Ausgestaltung kommen in den erfindungsgemäßen Masterbatches für die Silizium-haltigen Blockcopolymere A) demgemäß solche mit Endgruppen B, B' zum Einsatz, bei denen es sich um Aminoalkylsiloxan-Endgruppen, insbesondere Aminopropylsiloxan-Endgruppen, handelt.

Die Silizium-haltigen Blockcopolymere A) können erhalten werden durch Umsetzung mindestens einer mit mindestens einer, insbesondere mit mindestens oder genau zwei, Amino-, Hydroxy-, Carboxy-, Carboxylat-, Carbonsäureester- oder Carbonsäureanhydrid-Gruppen terminierten Siloxanverbindung mit mindestens einer mindestens bifunktionellen, insbesondere bifunktionellen, Verbindung, die zwei oder mehr, insbesondere zwei, insbesondere durch Polyaddition oder Polykondensation, verknüpfbare Gruppen aufweist.

Unter den besonders geeigneten bifunktionellen Monomeren kommen insbesondere solche in Betracht, ausgewählt aus der Gruppe bestehend aus Diisocyanaten, Diaminen, Diolen, Dicarbonsäuren, Diformaldehydterminierten Verbindungen und Mischungen hiervon, wobei Diisocyanate besonders bevorzugt sind. Geeignete Diisocyanate können dabei ausgewählt werden aus der Gruppe bestehend aus aliphatischen Diisocyanaten, insbesondere 1,6-Diisocyanat-hexan, 3-Isocyanatomethyl-3,5,5-trimethylcyclohexylisocyanat und/oder 1-Isocyanato-4-[(4-isocyanatocyclohexyl)-methyl]cyclohexan, und aromatischen Diisocyanaten, insbesondere 2,4- Toluylen-diisocyanat, 2,6-Toluylen-diisocyanat, 4,4'-2,2'-Diphenylmethandiisocyanat, 2,4'-2,2'-Diphenylmethandiisocyanat, 2,2'-Diphenylmethandiisocyanat, 4-Methyl-m-phenylendiisocyanat, 1,3-bis-(1-isocyanato-1-methylethyl)-benzol, Polyphenyl-polymethylen-polyisocyanaten und/oder urethanmodifizierten 4,4'-Diphe-nymethan-diisocyanaten, und deren Mischungen. Unter diesen sind aliphatische Diisocyanate bevorzugt.

Ganz besonders bevorzugt ist in den erfindungsgemäßen Masterbatches der Anteil an Komponente A) kleiner oder gleich 12,0 Gew.-%, bevorzugt kleiner oder gleich 10,0 Gew.-% und bevorzugt kleiner oder gleich 8,0 Gew.-%, jeweils bezogen auf das Gesamtgewicht des Masterbatches. Hierbei kann alternativ sowie insbesondere zusätzlich vorgesehen sein, dass der Anteil an dem mindestens einen anorganischen Pigment und/oder dem anorganischen Füllstoff B), insbesondere dem mindestens einen anorganischen Pigment im Bereich von 60 bis 80 Gew.-%, bezogen auf das Gesamtgewicht des Masterbatches, liegt. Ferner kann alternativ sowie insbesondere zusätzlich zu einer oder insbesondere zu beiden der vorangehend genannten Ausgestaltungen vorgesehen sein, dass der Anteil an dem mindestens einen Polymer C) im Bereich von 15 bis 25 Gew.-%, bezogen auf das Gesamtgewicht des Masterbatches, liegt, wobei die den Masterbatch bildenden Komponenten stets 100,0 Gew.-% ergeben.

Hierbei sind insbesondere auch solche erfindungsgemäßen Masterbatches bevorzugt, bei denen der Anteil an Komponente A) kleiner oder gleich 8,0 Gew.-%, bezogen auf das Gesamtgewicht des Masterbatches, der Anteil an dem mindestens einen anorganischen Pigment B) im Bereich von 60 bis 80 Gew.-%, bezogen auf das Gesamtgewicht des Masterbatches, der Anteil an dem mindestens einen Polymer C) im Bereich von 15 bis 25 Gew.-%, bezogen auf das Gesamtgewicht des Masterbatches, liegen, wobei die den Masterbatch bildenden Komponenten stets 100,0 Gew.-% ergeben.

Das mindestens eine anorganische Pigment ist vorzugsweise ausgewählt aus der Gruppe bestehend aus Oxiden, insbesondere Eisenoxid, Chromoxid und/oder Titandioxid; Ruß; Chromaten, insbesondere Bleichromatgelb; Molybdatorange, Komplexen anorganischer Buntpigmente, insbesondere Chromtitangelb, Chromeisenbraun, Kobaltblau, Nickeltitangelb, Zinkeisenbraun und/oder Wismutvanadatgelb, Sulfiden, insbesondere Cadmiumsulfid, Cersulfid, Ultramarin oder Zinksulfid, und deren beliebige Mischungen. Zusätzlich zu den anorganischen Pigmenten und/oder Füllstoffen können auch organische Pigmente und/oder Farbstoffe für die Farbeinstellung verwendet bzw. mitverwendet werden. Dabei können geeignete organische Pigmente ausgewählt werden aus der Gruppe bestehend aus Azopigmenten, z.B. verlackte Azopigmente (gelb, rot), Disazopigmenten (gelb, orange, rot), Diazokondensationspigmenten (gelb, rot), Benzimidazolpigmenten (gelb, orange), Metallkomplexpigmenten (gelb), Isoindolinpigmenten (gelb), Isoindolinonpigmenten (gelb), und polyzyklischen Pigmenten, z.B. Chinacridon (violett, blau), Chinophthalon (gelb), Diketo-Pyrrolo-Pyrrol (orange, rot, violett), Disoxazinpigmenten (violett), Indanthron (blau), Perylen (rot, violet) oder Phthalocyanin (blau, grün) und deren beliebige Mischungen. Geeignete Farbstoffe können zum Beispiel ausgewählt werden aus der Gruppe bestehend aus Anthrachinon, Chinophthalon, Pyrazolon, Perinon, Monoazofarbstoffen und fluoreszierenden Farbstoffen, z.B. Perylen, Naphthalimid, Cuminderivate, Thioindigo oder Thioxanthen-Benzanthron, und deren beliebige Mischungen. Bei Farbstoffen handelt es sich im Unterschied zu Pigmenten um Farbmittel, die in dem einzufärbenden Polymermaterial löslich sind. In den erfindungsgemäßen Masterbatches wird für die Farbgebung bevorzugt auf anorganische Pigmente zurückgegriffen.

Die thermoplastischen Polymere in Form der Polyolefin-Homopolymere stellen dar oder umfassen insbesondere Polypropylen und/oder Polyethylen und stellen vorzugsweise Polypropylen und/oder Polyethylen dar. Die thermoplastischen Elastomere in Form der thermoplastischen Polyurethanelastomere stellen dar oder umfassen insbesondere thermoplastische Polyurethanelastomere auf Basis von Polyester-Polyolen oder Polyether-Polyolen und stellen vorzugsweise thermoplastische Polyurethanelastomere auf Basis von Polyester-Polyolen oder Polyether-Polyolen dar.

Besonders geeignete thermoplastische Polymere können dabei ausgewählt werden aus der Gruppe bestehend aus Polypropylen und Polyethylen, bevorzugt LD-Polyethylen und besonders bevorzugt HD-Polyethylenund deren beliebigen Mischungen.

Geeignete Funktionsadditive werden in besonders geeigneten Ausgestaltungen ausgewählt aus der Gruppe bestehend aus Nukleierungsmitteln, Nanofüllstoffen, Schichtsilikaten, insbesondere delaminierten Schichtsilikaten, Stabilisatoren, insbesondere Thermostabilisatoren und/oder Lichtstabilisatoren, Antistatika, Flammschutzmitteln, Haftvermittlern, Antiblockmitteln, Verarbeitungshilfsmitteln, Treibmitteln, antimikrobielle Mitteln, insbesondere antibakterielle Mittel, und beliebigen Mischungen der vorangehend genannten Komponenten.

Bei den Blockcopolymeren gemäß Formel (I) und/oder (II) liegt der Parameter "n" vorzugsweise im Bereich von 80 bis 200, bevorzugt im Bereich von 100 bis 180 und besonders bevorzugt im Bereich von 110 bis 160. Ferner liegt bei den Blockcopolymeren gemäß Formel (I) und/oder (II) alternativ sowie insbesondere zusätzlich der Parameter "a" im Bereich von 5 bis 100 und bevorzugt im Bereich von 10 bis 50.

Dabei kann insbesondere vorgesehen sein, dass bei den Blockcopolymeren gemäß Formel (I) und/oder (II) "n" im Bereich von 80 bis 200 und "a" im Bereich von 5 bis 100 oder im Bereich von 10 bis 50 liegt oder dass "n" im Bereich von 100 bis 180 und "a" im Bereich von 5 bis 100 oder im Bereich von 10 bis 50 liegt oder dass "n" im Bereich von 110 bis 160 und "a" im Bereich von 5 bis 100 oder im Bereich von 10 bis 50 liegt. Insbesondere kann vorgesehen sein, dass bei den Blockcopolymeren gemäß Formel (I) und/oder (II) "n" im Bereich von 100 bis 180 und "a" im Bereich von 5 bis 100 oder im Bereich von 10 bis 50, bevorzugt im Bereich von 10 bis 50, liegt, wobei bevorzugt "n" im Bereich von 110 bis 160 und "a" im Bereich von 5 bis 100 oder im Bereich von 10 bis 50 liegt und wobei besonders bevorzugt "n" im Bereich von 110 bis 160 und "a" im Bereich von 10 bis 50 liegt.

Bei der Angabe der Wiederholungseinheiten "a" handelt es sich in einer zweckmäßigen Ausgestaltung um die durchschnittliche Anzahl an Wiederholungseinheiten in dem Blockcopolymer bzw. Copolymer gemäß den Verbindungen (I) und (II), wie es bei der Herstellung der erfindungsgemäßen Masterbatche erhalten wird. Bevorzugt handelt es sich bei der Angabe der Wiederholungseinheiten "a" um eine Absolutangabe.

Mit den erfindungsgemäßen Masterbatches gelingt es, dass man auf zuverlässige und wirtschaftliche Weise zu Systemen gelangt, in denen Pigmente, deren Primärpartikel im Größenbereich von wenigen Nanometern bis einigen Mikrometern liegen können, unter Ausschluss von Pigmentaggregaten und -agglomeraten in homogener Verteilung vorliegen. Hierbei ist es nicht einmal nötig, einen einmal bereits aufgeschmolzenen und granulierten Polymerwerkstoff erneut aufzuschmelzen und zu granulieren, wodurch die thermische Belastung und damit auch ein Abbau des Polymermaterials verhindert bzw. zurückgedrängt werden können. Man erhält einen höherwertigen, mit einem Masterbatch compoundierten Polymerwerkstoff. Die erfindungsgemäßen Masterbatche lassen sich zudem unabhängig von der gewählten Konzentration sehr gut in polymere Matrixmaterialien einarbeiten, ohne dass die Pigmente oder Wirkstoffadditive verklumpen oder dass Inhomogenitäten in den compoundierten Polymerwerkstoffen auftreten.

Die der Erfindung zugrunde liegende Aufgabe wird demgemäß des Weiteren gelöst durch einen Polymerwerkstoff, bestehend aus oder enthaltend
i) den Masterbatch nach einem der vorangehenden Ansprüche in einer Mindermenge und
ii) ein Matrixpolymer in einer Hauptmenge.

Unter einer Hauptmenge im Sinne der Erfindung wird ein Gewichtsanteil, bezogen auf das Gesamtgewicht des Polymerwerkstoffs, verstanden der oberhalb von 50 Gew.-% liegt, und unter einer Mindermenge im Sinne der Erfindung wird ein Gewichtsanteil, bezogen auf das Gesamtgewicht des Polymerwerkstoffs, verstanden der unterhalb von 50 Gew.-%, bevorzugt unterhalb von 20 Gew.-%, liegt.

In einer bevorzugten Ausgestaltung kann vorgesehen sein, dass das Matrixpolymer gemäß ii) und das Polymer C) des Masterbatches übereinstimmen. In einer alternativen Ausgestaltung kann vorgesehen sein, dass das Matrixpolymer gemäß ii) und das Polymer C) des Masterbatches nicht übereinstimmen. Geeignete Matrixpolymere gemäß ii) und Polymere C) des Masterbatches, die nicht übereinstimmen, werden zweckmäßigerweise derart ausgewählt, dass sie jedenfalls in gewissen Bereichsgrenzen miteinander, insbesondere homogen, mischbar sind bzw. im aus der Mischung hergestellten Formkörper im Wesentlichen nicht zu Entmischungsphänomenen neigen.

Für das Matrixpolymer wie auch das Polymer C) des Masterbatches kann grundsätzlich zurückgegriffen werden auf polymere Materialien, ausgewählt aus der Gruppe bestehend aus Thermoplasten, thermoplastischen Elastomeren und Mischungen hiervon, wobei solche Polymere bevorzugt sind, die auswählt sind aus der Gruppe bestehend aus Polyolefinen, insbesondere Polyethylen, z.B. HD-PE, und/oder Polypropylen oder Propylencopolymeren, Polyamiden, Polyestern wie Polyethylenterephthalat und/oder Polybutylenterephthalat, Polymethylmethacrylat, Polyaryletherketonen, Polyacrylnitril, Polyethylennaphthalaten, Polyethersulfonen, Polyimiden, Polyketonen, Polyphenylensulfiden, Polyphenylensulfonen, Polysulfonen, Styrol-Butadien-Kautschuken, Acryl-nitril-Butadien-Kautschuken, Naturkautschuken, thermoplastischen Elastomeren auf Basis von vernetztem Kautschuk, Ethylen-Vinylacetat-Copolymeren, Polyhydroxybutyrat, Polylactiden, Polyetherimiden, Polyoxyethylen, Polycarbonaten, Polystyrol, schlagzähmodifiziertem Polystyrol, Styrolbasiertem (Co)-Polymeren wie ABS, SAN, PS, HIPS und/oder ASA, Styrol-basierten thermoplastischen Elastomeren wie SEBS, olefinisch-basierten thermoplastischen Elastomeren wie LLDPE, EOC, TPV und/oder EVA, PE/Polyester-basierten thermoplastischen Elastomeren, Urethan-basierten thermoplastischen Elastomeren, Polyether-Block-Amiden (PE-BA), PVC, Polyurethanen, z.B. thermoplastischen Polyurethanen, und thermoplastischer Stärke oder beliebigen Mischungen hiervon, insbesondere Polyethylen, Polypropylen, Polyamiden, Polyethylenterephthalat und/oder Polybutylenterephthalat.

Das Matrixmaterial die erfindungsgemäßen Polymerwerkstoffe wird vorzugsweise ausgewählt aus der Gruppe bestehend aus Polyolefin-Homo- und Copolymeren, insbesondere Polypropylen und/oder Polyethylen, Polyestern, Polyoxymethylen, Polyvinylchlorid, thermoplastischen Polyurethanelastomeren, insbesondere auf Basis von Polyester-Polyolen oder Polyether-Polyolen, und beliebigen Mischungen hiervon.

In den erfindungsgemäßen Polymerwerkstoffen ist der der Anteil an dem Masterbatch vorzugsweise kleiner oder gleich 7,0 Gew.-%, bevorzugt kleiner oder gleich 5,0 Gew.-%, und besonders bevorzugt im Bereich von 0,5 bis 3 Gew.-%, Jeweils bezogen auf das Gesamtgewicht des Polymerwerkstoffs.

Dabei kann alternativ sowie insbesondere zusätzlich vorgesehen sein, dass in den erfindungsgemäßen Polymerwerkstoffen der Anteil an Komponente A) im Polymerwerkstoff vorzugsweise kleiner oder gleich 0,8 Gew.-%, bevorzugt kleiner oder gleich 0,6 Gew.-% und besonders bevorzugt kleiner oder gleich 0,4 Gew.-%, ist, bezogen auf des Gesamtgewicht des Polymerwerkstoffs.

Ferner kann alternativ sowie insbesondere zusätzlich zu einer sowie insbesondere beiden der vorangehend genannten Ausführungsform vorgesehen sein, dass der Anteil an dem mindestens einen anorganisches Pigment und/oder dem anorganischen Füllstoff B), insbesondere dem mindestens einen anorganischen Pigment, im Bereich von 0,5 bis 6,0 Gew.-%, inbesondere im Bereich von 1,0 bis 4,0 Gew.-%, bezogen auf das Gesamtgewicht des Polymerwerkstoffs, liegt.

Insbesondere sind dabei auch solche erfindungsgemäßen Polymerwerkstoffe bevorzugt, bei denen der Anteil an Komponente A) des Masterbatches im Polymerwerkstoff kleiner oder gleich 0,4 Gew.-%, bezogen auf des Gesamtgewicht des Polymerwerkstoffs, und der Anteil an dem mindestens einen anorganisches Pigment B) des Masterbatches im Polymerwerkstoff im Bereich von 1,0 bis 4,0 Gew.-%, bezogen auf das Gesamtgewicht des Polymerwerkstoffs, liegen.

Für den erfindungsgemäßen Polymerwerkstoff kommen als besonders geeignetes Matrixpolymer Polypropylen oder Polyethylen, bevorzugt LD-Polyethylen und besonders bevorzugt HD-Polyethylen, und sowie gleichzeitig als besonders geeignetes Polymer C) des Masterbatches Polypropylen oder Polyethylen, bevorzugt LD-Polyethylen und besonders bevorzugt HD-Polyethylen, in Betracht.

Ganz besonders bevorzugte erfindungsgemäße Polymerwerkstoffe sind gekennzeichnet durch eine Menge im Bereich von 96,0 bis 99,9 Gew.-%, bevorzugt im Bereich von 98,0 bis 99,5 Gew.-%, an dem Matrixpolymer Polypropylen oder Polyethylen, bevorzugt LD-Polyethylen und besonders bevorzugt HD-Polyethylen, bezogen auf das Gesamtgewicht aus Matrixpolymer und Polymer C), und/oder, insbesondere und, eine Menge im Bereich von 0,1 bis 4,0 Gew.-%, bevorzugt im Bereich von 0,5 bis 2,0 Gew.-%, an Polypropylen oder Polyethylen, bevorzugt LD-Polyethylen und besonders bevorzugt HD-Polyethylen, als Polymer C) des Masterbatches.

Auch sind solche erfindungsgemäßen Polymerwerkstoffe besonders bevorzugt, bei denen die Menge an dem Matrixpolymer Polypropylen oder Polyethylen, insbesondere HD-Polyethylen, bezogen auf das Gesamtgewicht aus Matrixpolymer und Polymer C), im Bereich von 98,0 bis 99,5 Gew.-%, und die die Menge an dem Polymer C) des Masterbatches in dem Polymerwerkstoff, nämlich HD-Polyethylen, im Bereich von 0,5 bis 2,0 Gew.-%, bezogen auf das Gesamtgewicht aus Matrixpolymer und Polymer C), liegt.

Mit den erfindungsgemäßen Polymerwerkstoffen gelingt es ebenfalls, Faserstoffe in zufriedenstellender Weise einzuarbeiten. Die diese Faserstoffe enthaltenden Formkörper können überraschenderweise auch mit relativ geringen Mengen an in den erfindungsgemäßen Masterbatches enthaltenen Pigmenten zufriedenstellend und gleichmäßig eingefärbt werden.

Hierbei können geeignete Faserstoffe ausgewählt werden aus der Gruppe bestehend aus Mineralfasern, Kunststofffasern, Baumwolle, Zellulosefasern, Viskosefasern, Naturfasern und beliebigen Mischungen hiervon, und/oder partikuläre Zusatzstoffe aus nachwachsenden Rohstoffen.

Ferner können hierbei besonders bevorzugte Naturfasern ausgewählt werden aus der Gruppe bestehend aus Holzfasern, Hanffasern, Flachsfasern, Jutefasern, Hanffasern, Bambusfasern, Kenaffasern, Nesselfasern, Seegras, Elefantengras, Mescanthum, Schilfrohr, Kokosfasern, Stroh und beliebigen Mischungen hiervon und/oder dass die Mineralfasern ausgewählt sind aus der Gruppe bestehend aus Basalt-, Keramik- und/oder Glasfasern und/oder dass die Kunststofffasern ausgewählt sind aus der Gruppe bestehend aus Polyethylen-, Polypropylen-, Polyester- und Polyamidfasern und deren beliebigen Mischungen. Geeignete Naturfasern, insbesondere Holzfasern, verfügen in der Regel über ein Aspektverhältnis (Verhältnis von Länge zur Breite) größer 10:1, bevorzugt größer 20:1.

Für die partikulären Zusatzstoffe greift man vorzugsweise auf solche aus nachwachsenden Rohstoffen zurück, die ausgewählt sind aus der Gruppe bestehend aus Reisschalen, Sonnenblumenkernschalen, Holzpartikeln, insbesondere Hartholzpartikel, und deren beliebigen Mischungen. Geeignete Holzpartikel umfassen auch z.B. Holzmehl. Geeignete Holzpartikel verfügen in der Regel über ein Aspektverhältnis (Verhältnis von Länge zur Breite) kleiner oder gleich 10:1, bevorzugt kleiner 5:1.

Besonders geeignete Faserstoffe verfügen dabei über eine durchschnittliche Faserlänge im Bereich 100 bis 4500 µm, z.B. im Bereich von 100 bis 2000 µm, insbesondere im Bereich von 300 bis 3000 µm, z.B. im Bereich von 500 bis 3000 µm, aufweisen und/oder dass die partikulären Zusatzstoffe aus nachwachsenden Rohstoffen eine durchschnittliche Partikelgröße im Bereich 100 bis 500 µm, insbesondere im Bereich von 200 bis 400 µm, aufweisen.

Besonders bevorzugte erfindungsgemäße Polymerwerkstoffe enthalten einen Anteil an dem Masterbatch im Bereich von 0,5 bis 3,0 Gew.-%, insbesondere im Bereich von 0,5 bis 2,0 Gew.-%, und einen Anteil an Matrixpolymer im Bereich von 98,0 bis 99,5 Gew.-%, wobei die den Polymerwerkstoff bildenden Komponenten stets 100,0 Gew.-% ergeben.

Ferner enthalten besonders bevorzugte erfindungsgemäße Polymerwerkstoffe einen Anteil an Komponente A) im Polymerwerkstoff kleiner oder gleich 0,4 Gew.-% und einen Anteil an dem mindestens einen anorganisches Pigment im Bereich von 1,0 bis 4,0 Gew.-%, jeweils bezogen auf das Gesamtgewicht des Polymerwerkstoffs, wobei das Matrixpolymer Polyethylen, insbesondere HD-Polyethylen, und das Polymer C) des Masterbatches Polyethylen, bevorzugt HD-Polyethylen, ist.

In einer weiteren bevorzugten Ausführungsform enthalten besonders bevorzugte erfindungsgemäße Polymerwerkstoffe einen Anteil an Komponente A) im Polymerwerkstoff kleiner oder gleich 0,4 Gew.-% und einen Anteil an dem mindestens einen anorganisches Pigment B) im Bereich von 1,0 bis 4,0 Gew.-%, jeweils bezogen auf das Gesamtgewicht des Polymerwerkstoffs, sowie Naturfasern, insbesondere Holzfasern, und/oder partikuläre Zusatzstoffe aus nachwachsenden Rohstoffen, insbesondere Holzpartikel, wobei das Matrixpolymer Polyethylen, insbesondere HD-Polyethylen, und das Polymer C) des Masterbatches Polyethylen, bevorzugt HD-Polyethylen, ist und wobei die den Polymerwerkstoff bildenden Komponenten stets 100,0 Gew.-% ergeben.

Die erfindungsgemäßen Formkörper sind dabei vorzugsweise zugänglich durch Spritzgießen, Extrudieren, Formpressen, Walzenrotation, Rotationsformen, Lasersintern, Fused Deposition Modelling (FDM), Granulieren und/oder Gießen des erfindungsgemäßen Polymerwerkstoffs.

Mit den erfindungsgemäßen Masterbatches lassen sich Polymerwerkstoffe und damit auch Formkörper besonders zufriedenstellend und zuverlässig Einfärben sowie gegebenenfalls zusätzlich oder alternativ sogar mit Funktionsadditiven ausstatten.

Der vorliegenden Erfindung liegt die überraschende Erkenntnis zugrunde, dass bei Verwendung spezieller Silizium-haltiger Blockcopolymere und unter Einhaltung von Mengenvorgaben für die zu verwendenden Komponenten Masterbatche in Granulatform erhalten werden, die sich unproblematisch herstellen lassen, die gut rieselfähig sind, d.h. nicht zum Verkleben neigen, und die ein verringertes Verblockungsverhaltens zeigen. Ferner wurde überraschend gefunden, dass die aus den erfindungsgemäßen Masterbatchen erhaltenen Formmassen und Formkörper keine oder nur noch eine reduzierte Wasseraufnahme zeigen. Ohne an eine Theorie gebunden zu sein, wird vermutet, dass dieses damit zusammenhängen könnte, dass die erfindungsgemäßen Formmassen und Formkörper sich durch eine reduzierte Porosität auszeichnen. Als vorteilhaft hat sich ebenfalls herausgestellt, dass die erfindungsgemäßen Formmassen bei der Herstellung von Formkörpern im schmelzeflüssigen Zustand eine bessere bzw. kontrolliertere Gleitfähigkeit im Formwerkzeug, insbesondere im Extruder zeigen. Die erfindungsgemäßen Formkörpern lassen sich vorteilhafterweise zuverlässig und ohne Probleme aus dem Formwerkzeug, beispielsweise einem Spritzgusswerkzeug entformen. Auch sind die erfindungsgemäßen Formkörpern mit einer ausgeprägten Abriebfestigkeit ausgestattet. Überraschenderweise gestatten die erfindungsgemäßen Masterbatche eine sehr hohe Pigmentbeladung, auch weisen die Pigmente in dem Masterbatch eine hohe Dispersität auf.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein. Der Umfang des Schutzes wird durch die Patentansprüche festgelegt.

## Patentansprüche

1. Masterbatch, insbesondere in Granulat-Form, bestehend aus oder enthaltend
a) mindestens ein Silizium-haltiges Blockcopolymer A),
b) mindestens ein anorganisches Pigment und/oder einen anorganischen Füllstoff B), insbesondere mindestens ein anorganisches Pigment, und
c) mindestens ein Polymer C) ausgewählt aus der Gruppe bestehend aus thermoplastischen Polymeren, ausgewählt aus der Gruppe bestehend aus Polyolefin-Homo- und -Copolymeren, Polyestern, Polyvinylchlorid und beliebigen Mischungen hiervon,
thermoplastischen Elastomeren, umfassend oder darstellend thermoplastische Polyurethanelastomere, oder Mischungen hiervon.

2. Masterbatch nach Anspruch 1, **dadurch gekennzeichnet, dass** das Gewichtsverhältnis des mindestens einen Silizium-haltigen Blockcopolymers A) zu dem mindestens einen Polymer C), insbesondere dem mindestens einen thermoplastischen Polymer, im Bereich von 1:9 bis 9:1, insbesondere im Bereich von 1:7 bis 1:2, liegt.

3. Masterbatch nach Anspruch 1 oder 2, enthaltend
a) das mindestens eine Silizium-haltige Blockcopolymer A) in einer Menge kleiner 10 Gew.-%, bezogen auf das Gesamtgewicht des Masterbatches,
b) das mindestens eine anorganische Pigment und/oder den einen anorganischen Füllstoff B), insbesondere mindestens das eine anorganische Pigment, in einer Menge kleiner oder gleich 80 Gew.-%, bevorzugt im Bereich von 55 bis 78 Gew.-%, jeweils bezogen auf das Gesamtgewicht des Masterbatches, und/oder, insbesondere und,
c) das mindestens eine Polymer C), insbesondere das mindestens eine thermoplastische Polymer, in einer Menge kleiner oder gleich 35 Gew.-%, bevorzugt im Bereich von 5 bis 28 Gew.-%, jeweils bezogen auf das Gesamtgewicht des Masterbatches,
wobei die den Masterbatch bildenden Komponenten sich jeweils zu 100,0 Gew.-% addieren.

4. Masterbatch nach einem der vorangehenden Ansprüche, **dadurch gekennzeichnet, dass**
das mindestens eine Silizium-haltige Blockcopolymer A) ausgewählt ist aus der Gruppe bestehend aus
- einem ersten Blockcopolymer A1) mit der allgemeinen Formel (I)
B-[R₂-(O-Si(R₁)₂)ₙ-O-Si(R₁)₂-R₂-NH-CO-NH-R₃-NH-CO-NH]ₐ-B'
mit
R1 unabhängig voneinander ein einwertiger gegebenenfalls durch Fluor oder Chlor substituierter Kohlenwasserstoffrest mit 1 bis 20 Kohlenstoffatomen,
R2 - unabhängig voneinander - ein Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
R3 ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
B, B' eine reaktive oder nicht reaktive Endgruppe, welche kovalent an das Polymer gebunden ist,
n: eine Zahl von 1 bis 10000, bevorzugt im Bereich von 75 bis 215, besonders bevorzugt im Bereich von 80 bis 200 und insbesondere im Bereich von 100 bis 180 oder 110 bis 160, und
a: eine Zahl von mindestens 1, bevorzugt im Bereich von oder zwischen 1 bis 140, besonders bevorzugt im Bereich von 5 bis 100 und ferner bevorzugt im Bereich von 10 bis 50;
einem zweiten Blockcopolymer A2) mit der allgemeinen Formel (II)
B-[R²-(O-Si(R¹)₂)ₙ-O-Si(R¹)₂-R²-NH-CO-NH-R³-NH-CO-V-R⁴-W-CO-NH-R³-NH-CO-NH]ₐ-B'
mit
R1 unabhängig voneinander ein einwertiger gegebenenfalls durch Fluor oder Chlor substituierter Kohlenwasserstoffrest mit 1 bis 20 Kohlenstoffatomen,
R2 - unabhängig voneinander - ein Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
R3 ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
R4 ein gegebenenfalls durch Fluor, Chlor, C1-C6-Alkyl- oder C1-C6-Alkylester substituierter Alkylenrest mit 1 bis 700 C-Atomen, in dem einander nicht benachbarte Methyleneinheiten durch Gruppen -O-, - COO-, -OCO-oder - OCOO- ersetzt sein können,
V, W unabhängig voneinander -O- oder -NR5-, wobei R5 Wasserstoff, ein Alkylrest mit 1 bis 10 C-Atomen oder ein Arylrest mit 6 bis 22 C-Atomen ist,
B, B': eine reaktive oder nicht reaktive Endgruppe, welche kovalent an das Polymer gebunden ist,
n: eine Zahl von 1 bis 10000, bevorzugt im Bereich von 75 bis 215, besonders bevorzugt im Bereich von 80 bis 200 und insbesondere von 100 bis 180 oder 110 bis 160,
a: eine Zahl von mindestens 1, bevorzugt im Bereich von oder zwischen 1 bis 140, besonders bevorzugt im Bereich von 5 bis 100 und ferner bevorzugt im Bereich von 10 bis 50,
und
- beliebigen Mischungen der Blockcopolymere A1) und A2).

5. Masterbatch nach einem der vorangehenden Ansprüche, **dadurch gekennzeichnet, dass**
der Anteil an Komponente A) kleiner oder gleich 12,0 Gew.-%, bevorzugt kleiner oder gleich 10,0 Gew.-% und besonders bevorzugt kleiner oder gleich 8,0 Gew.-%, jeweils bezogen auf das Gesamtgewicht des Masterbatches, ist und/oder, insbesondere und, dass
der Anteil an dem mindestens einen anorganischen Pigment und/oder dem anorganischen Füllstoff B), insbesondere dem mindestens einen anorganischen Pigment im Bereich von 60 bis 80 Gew.-%, bezogen auf das Gesamtgewicht des Masterbatches, liegt und/oder dass
der Anteil an dem mindestens einen Polymer C) im Bereich von 15 bis 25 Gew.-%, bezogen auf das Gesamtgewicht des Masterbatches, liegt,
wobei die den Masterbatch bildenden Komponenten stets 100,0 Gew.-% ergeben.

6. Masterbatch nach einem der vorangehenden Ansprüche, **dadurch gekennzeichnet, dass**
das Polyolefin-Homopolymer Polypropylen und/oder Polyethylen umfasst oder darstellt oder dass
die thermoplastischen Polyurethanelastomere thermoplastische Polyurethanelastomere auf Basis von Polyester-Polyolen oder Polyether-Polyolen umfassen oder darstellen, insbesondere darstellen.

7. Masterbatch nach einem der vorangehenden Ansprüche, **dadurch gekennzeichnet, dass**
das thermoplastische Polymere ausgewählt ist aus der Gruppe bestehend aus Polypropylen, Polyethylen, bevorzugt LD-Polyethylen und besonders bevorzugt HD-Polyethylen, und deren beliebigen Mischungen.

8. Masterbatch nach einem der Ansprüche 4 bis 7, **dadurch gekennzeichnet, dass** bei den Blockcopolymeren gemäß Formel (I) und/oder (II) "n" im Bereich von 80 bis 200, bevorzugt im Bereich von 100 bis 180 und besonders bevorzugt im Bereich von 110 bis 160 liegt und/oder, insbesondere und, dass
bei den Blockcopolymeren gemäß Formel (I) und/oder (II) "a" im Bereich von 5 bis 100 und bevorzugt im Bereich von 10 bis 50 liegt.

9. Masterbatch nach einem der Ansprüche 4 bis 8, **dadurch gekennzeichnet, dass** bei den Blockcopolymeren gemäß Formel (I) und/oder (II) "n" im Bereich von 100 bis 180 und "a" im Bereich von 5 bis 100 oder im Bereich von 10 bis 50, bevorzugt im Bereich von 10 bis 50, liegt, wobei bevorzugt "n" im Bereich von 110 bis 160 und "a" im Bereich von 5 bis 100 oder im Bereich von 10 bis 50 liegt und wobei besonders bevorzugt "n" im Bereich von 110 bis 160 und "a" im Bereich von 10 bis 50 liegt.

10. Polymerwerkstoff, bestehend aus oder enthaltend
i) den Masterbatch nach einem der vorangehenden Ansprüche in einer Mindermenge und
ii) ein Matrixpolymer in einer Hauptmenge.

11. Polymerwerkstoff nach Anspruch 10, **dadurch gekennzeichnet, dass**
das Matrixpolymer gemäß ii) und das Polymer C) des Masterbatches übereinstimmen.

12. Polymerwerkstoff nach Anspruch 10 oder 11, **dadurch gekennzeichnet, dass** das Matrixmaterial ausgewählt ist aus der Gruppe bestehend aus Polyolefin-Homo- und Copolymeren, insbesondere Polypropylen und/oder Polyethylen, Polyestern, Polyoxymethylen, Polyvinylchlorid, thermoplastischen Polyurethanelastomeren, insbesondere auf Basis von Polyester-Polyolen oder Polyether-Polyolen, und beliebigen Mischungen hiervon.

13. Polymerwerkstoff nach einem der Ansprüche 10 bis 12, **dadurch gekennzeichnet, dass**
der Anteil an dem Masterbatch kleiner oder gleich 7,0 Gew.-%, bevorzugt kleiner oder gleich 5,0 Gew.-% ist, und besonders bevorzugt im Bereich von 0,5 bis 3,0 Gew.-% liegt, bezogen auf das Gesamtgewicht des Polymerwerkstoffs.

14. Polymerwerkstoff nach einem der Ansprüche 10 bis 13, **dadurch gekennzeichnet, dass**
der Anteil an Komponente A) im Polymerwerkstoff kleiner oder gleich 0,8 Gew.-%, bevorzugt kleiner oder gleich 0,6 Gew.-% und besonders bevorzugt kleiner oder gleich 0,4 Gew.-%, ist, bezogen auf des Gesamtgewicht des Polymerwerkstoffs, und/oder, insbesondere und, dass
der Anteil an dem mindestens einen anorganisches Pigment und/oder dem anorganischen Füllstoff B), insbesondere dem mindestens einen anorganischen Pigment, im Bereich von 0,5 bis 6,0 Gew.-%, insbesondere im Bereich von 1,0 bis 4,0 Gew.-%, bezogen auf das Gesamtgewicht des Polymerwerkstoffs, liegt,
wobei die den Polymerwerkstoff bildenden Komponenten stets 100,0 Gew.-% ergeben.

15. Polymerwerkstoff nach einem der Ansprüche 10 bis 14, **dadurch gekennzeichnet, dass**
das Matrixpolymer Polypropylen oder Polyethylen, bevorzugt LD-Polyethylen und besonders bevorzugt HD-Polyethylen, und das Polymer C) des Masterbatches Polypropylen oder Polyethylen, bevorzugt LD-Polyethylen und besonders bevorzugt HD-Polyethylen, umfasst oder darstellt, insbesondere darstellt.

16. Polymerwerkstoff nach Anspruch 15, **gekennzeichnet durch** eine Menge im Bereich von 96,0 bis 99,9 Gew.-%, bevorzugt im Bereich von 98,0 bis 99,5 Gew.-%, an dem Matrixpolymer Polypropylen oder Polyethylen, bevorzugt LD-Polyethylen und besonders bevorzugt HD-Polyethylen, bezogen auf das Gesamtgewicht aus Matrixpolymer und Polymer C), und/oder, insbesondere und, eine Menge im Bereich von 0,1 bis 4,0 Gew.-%, bevorzugt im Bereich von 0,5 bis 2,0 Gew.-%, an Polypropylen oder Polyethylen, bevorzugt LD-Polyethylen und besonders bevorzugt HD-Polyethylen, als Polymer C) des Masterbatches.

17. Polymerwerkstoff nach einem der Ansprüche 10 bis 16, ferner umfassend Faserstoffe ausgewählt sind aus der Gruppe bestehend aus Mineralfasern, Kunststofffasern, Baumwolle, Zellulosefasern, Viskosefasern, Naturfasern, insbesondere Holzfasern, und beliebigen Mischungen hiervon, insbesondere Naturfasern wie Holzfasern, und/oder partikuläre Zusatzstoffe aus nachwachsenden Rohstoffen, insbesondere ausgewählt aus der Gruppe bestehend aus Reisschalen, Sonnenblumenkernschalen, Holzpartikeln und deren beliebigen Mischungen, bevorzugt Holzpartikel.

18. Polymerwerkstoff nach einem der Ansprüche 10 bis 17, **dadurch gekennzeichnet, dass** die Faserstoffe eine durchschnittliche Faserlänge im Bereich 100 bis 4500 µm, insbesondere im Bereich von 500 bis 3000 µm, aufweisen und/oder dass die partikulären Zusatzstoffe aus nachwachsenden Rohstoffen eine durchschnittliche Partikelgröße im Bereich 100 bis 500 µm, insbesondere im Bereich von 200 bis 400 µm, aufweisen.

19. Formkörper, erhalten oder erhältlich durch Spritzgießen, Extrudieren, Formpressen, Walzenrotation, Rotationsformen, Lasersintern, Fused Deposition Modelling (FDM), Granulieren und/oder Gießen des Polymerwerkstoffs nach einem der Ansprüche 10 bis 18.

20. Verwendung des Masterbatches nach einem der Ansprüche 1 bis 9 zur Einfärbung von Polymerwerkstoffen oder Formkörpern.

## Claims

1. Masterbatch, in particular in granulate form, consisting of or containing
a) at least one silicon-containing block copolymer A),
b) at least one inorganic pigment and/or an inorganic filler B), in particular at least one inorganic pigment, and
c) at least one polymer C) selected from the group consisting of thermoplastic polymers, selected from the group consisting of polyolefin homo- and copolymers, polyesters, polyvinyl chloride and any desired mixtures thereof, thermoplastic elastomers, comprising or representing thermoplastic polyurethane elastomers, or
mixtures thereof.

2. Masterbatch according to Claim 1, **characterized in that**
the weight ratio of the at least one silicon-containing block copolymer A) to the at least one polymer C), in particular the at least one thermoplastic polymer, is in the range from 1:9 to 9:1, in particular in the range from 1:7 to 1:2.

3. Masterbatch according to Claim 1 or 2, containing
a) the at least one silicon-containing block copolymer A) in an amount of less than 10% by weight, based on the total weight of the masterbatch,
b) the at least one inorganic pigment and/or the one inorganic filler B), in particular at least the one inorganic pigment, in an amount of less than or equal to 80% by weight, preferably in the range from 55 to 78% by weight, in each case based on the total weight of the masterbatch, and/or, in particular and,
c) the at least one polymer C), in particular the at least one thermoplastic polymer, in an amount of less than or equal to 35% by weight, preferably in the range from 5 to 28% by weight, in each case based on the total weight of the masterbatch,
wherein the components forming the masterbatch in each case add up to 100.0% by weight.

4. Masterbatch according to any of the preceding claims, **characterized in that** the at least one silicon-containing block copolymer A) is selected from the group consisting of
- a first block copolymer A1) having the general formula (I)
B-[R₂-(O-Si(R₁)₂)ₙ-O-Si(R₁)₂-R₂-NH-CO-NH-R₃-NH-CO-NH]ₐ-B'
where
R1 independently of one another a monovalent hydrocarbon residue which has 1 to 20 carbon atoms and is optionally substituted by fluorine or chlorine,
R2 - independently of one another - an alkylene residue having 1 to 20 carbon atoms, in which methylene units which are not adjacent to one another may be replaced by -O- groups, or an arylene residue having 6 to 22 carbon atoms,
R3 an alkylene residue which has 1 to 20 carbon atoms and is optionally substituted by fluorine or chlorine, in which methylene units which are not adjacent to one another may be replaced by -O- groups, or an arylene residue having 6 to 22 carbon atoms,
B, B' a reactive or nonreactive end group which is covalently bonded to the polymer,
n: a number from 1 to 10000, preferably in the range from 75 to 215, particularly preferably in the range from 80 to 200 and in particular in the range from 100 to 180 or 110 to 160, and
a: a number of at least 1, preferably in the range from or between 1 and 140, particularly preferably in the range from 5 to 100 and further preferably in the range from 10 to 50;
a second block copolymer A2) having the general formula (II)
B-[R²-(O-Si(R¹)₂)ₙ-O-Si(R¹)₂-R²-NH-CO-NH-R³-NH-CO-V-R⁴-W-CO-NH-R³-NH-CO-NH]ₐ-B'
where
R1 independently of one another a monovalent hydrocarbon residue which has 1 to 20 carbon atoms and is optionally substituted by fluorine or chlorine,
R2 - independently of one another - an alkylene residue having 1 to 20 carbon atoms, in which methylene units which are not adjacent to one another may be replaced by -O- groups, or an arylene residue having 6 to 22 carbon atoms,
R3 an alkylene residue which has 1 to 20 carbon atoms and is optionally substituted by fluorine or chlorine, in which methylene units which are not adjacent to one another may be replaced by -O- groups, or an arylene residue having 6 to 22 carbon atoms,
R4 an alkylene residue which has 1 to 700 carbon atoms optionally substituted by fluorine, chlorine, C1 -C6 -alkyl or C1 -C6 -alkyl ester, in which methylene units which are not adjacent to one another may be replaced by -O-, - COO-, -OCO- or -OCOO- groups,
V, W independently of one another -O- or -NR5-, wherein R5 is hydrogen, an alkyl residue with 1 to 10 carbon atoms or an aryl residue having 6 to 22 carbon atoms,
B, B': a reactive or nonreactive end group which is covalently bonded to the polymer,
n: a number from 1 to 10000, preferably in the range from 75 to 215, particularly preferably in the range from 80 to 200 and in particular from 100 to 180 or 110 to 160,
a: a number of at least 1, preferably in the range from or between 1 and 140, particularly preferably in the range from 5 to 100 and further preferably in the range from 10 to 50,
and
- any desired mixtures of the block copolymers A1) and A2).

5. Masterbatch according to any of the preceding claims, **characterized in that** the proportion of component A) is less than or equal to 12.0% by weight, preferably less than or equal to 10.0% by weight and particularly preferably less than or equal to 8.0% by weight, in each case based on the total weight of the masterbatch, and/or, in particular and, **in that**
the proportion of the at least one inorganic pigment and/or the inorganic filler B), in particular the at least one inorganic pigment, is in the range from 60 to 80% by weight, based on the total weight of the masterbatch, and/or **in that** the proportion of the at least one polymer C) is in the range from 15 to 25% by weight, based on the total weight of the masterbatch,
wherein the components forming the masterbatch always give 100.0% by weight.

6. Masterbatch according to any of the preceding claims, **characterized in that**
the polyolefin homopolymer comprises or represents polypropylene and/or polyethylene, or **in that**
the thermoplastic polyurethane elastomers comprise or represent, in particular represent, thermoplastic polyurethane elastomers based on polyester polyols or polyether polyols.

7. Masterbatch according to any of the preceding claims, **characterized in that** the thermoplastic polymer is selected from the group consisting of polypropylene, polyethylene, preferably LD-polyethylene and particularly preferably HD-polyethylene, and any desired mixtures thereof.

8. Masterbatch according to any of Claims 4 to 7, **characterized in that** in the case of the block copolymers according to formula (I) and/or (II) "n" is in the range from 80 to 200, preferably in the range from 100 to 180 and particularly preferably in the range from 110 to 160, and/or, in particular and, **in that** in the case of the block copolymers according to formula (I) and/or (II) "a" is in the range from 5 to 100 and preferably in the range from 10 to 50.

9. Masterbatch according to any of Claims 4 to 8, **characterized in that** in the case of the block copolymers according to formula (I) and/or (II) "n" is in the range from 100 to 180 and "a" is in the range from 5 to 100 or in the range from 10 to 50, preferably in the range from 10 to 50, wherein preferably "n" is in the range from 110 to 160 and "a" is in the range from 5 to 100 or in the range from 10 to 50 and wherein particularly preferably "n" is in the range from 110 to 160 and "a" is in the range from 10 to 50.

10. Polymer material consisting of or containing
i) the masterbatch according to any of the preceding claims in a minor amount and
ii) a matrix polymer in a major amount.

11. Polymer material according to Claim 10, **characterized in that** the matrix polymer according to ii) and the polymer C) of the masterbatch correspond.

12. Polymer material according to Claim 10 or 11, **characterized in that** the matrix material is selected from the group consisting of polyolefin homo- and copolymers, in particular polypropylene and/or polyethylene, polyesters, polyoxymethylene, polyvinyl chloride, thermoplastic polyurethane elastomers, in particular based on polyester polyols or polyether polyols, and any desired mixtures thereof.

13. Polymer material according to any of Claims 10 to 12, **characterized in that** the proportion of the masterbatch is less than or equal to 7.0% by weight, preferably less than or equal to 5.0% by weight, and particularly preferably in the range from 0.5 to 3.0% by weight, based on the total weight of the polymer material.

14. Polymer material according to any of Claims 10 to 13, **characterized in that** the proportion of component A) in the polymer material is less than or equal to 0.8% by weight, preferably less than or equal to 0.6% by weight and particularly preferably less than or equal to 0.4% by weight, based on the total weight of the polymer material,
and/or, in particular and, **in that**
the proportion of the at least one inorganic pigment and/or the inorganic filler B), in particular the at least one inorganic pigment, is in the range from 0.5 to 6.0% by weight, in particular in the range from 1.0 to 4.0% by weight, based on the total weight of the polymer material,
wherein the components forming the polymer material always give 100.0% by weight.

15. Polymer material according to any of Claims 10 to 14, **characterized in that** the matrix polymer comprises or represents, in particular represents, polypropylene or polyethylene, preferably LD-polyethylene and particularly preferably HD-polyethylene, and the polymer C) of the masterbatch comprises or represents, in particular represents, polypropylene or polyethylene, preferably LD-polyethylene and particularly preferably HD-polyethylene.

16. Polymer material according to Claim 15, **characterized by** an amount in the range from 96.0 to 99.9% by weight, preferably in the range from 98.0 to 99.5% by weight, of the matrix polymer polypropylene or polyethylene, preferably LD-polyethylene and particularly preferably HD-polyethylene, based on the total weight of matrix polymer and polymer C), and/or, in particular and, an amount in the range from 0.1 to 4.0% by weight, preferably in the range from 0.5 to 2.0% by weight, of polypropylene or polyethylene, preferably LD-polyethylene and particularly preferably HD-polyethylene, as polymer C) of the masterbatch.

17. Polymer material according to any of Claims 10 to 16, further comprising fibrous materials selected from the group consisting of mineral fibers, plastic fibers, cotton, cellulose fibers, viscose fibers, natural fibers, in particular wood fibers, and any desired mixtures thereof, in particular natural fibers such as wood fibers, and/or particulate additives from renewable raw materials, in particular selected from the group consisting of rice husks, sunflower husks, wood particles and any desired mixtures thereof, preferably wood particles.

18. Polymer material according to any of Claims 10 to 17, **characterized in that** the fibrous materials have an average fiber length in the range from 100 to 4500 µm, in particular in the range from 500 to 3000 µm, and/or **in that** the particulate additives from renewable raw materials have an average particle size in the range from 100 to 500 µm, in particular in the range from 200 to 400 µm.

19. Moulded body obtained or obtainable by injection molding, extrusion, compression molding, roll rotation, rotational molding, laser sintering, fused deposition modelling (FDM), granulation and/or casting of the polymer material according to any of Claims 10 to 18.

20. Use of the masterbatch according to any of Claims 1 to 9 for colouring polymer materials or moulded bodies.

## Revendications

1. Masterbatch, en particulier sous forme de granulés, constitué par ou contenant
a) au moins un copolymère bloc contenant du silicium A),
b) au moins un pigment inorganique et/ou une charge inorganique B), en particulier au moins un pigment inorganique, et
c) au moins un polymère C) choisi dans le groupe constitué par les polymères thermoplastiques, choisis dans le groupe constitué par les homopolymères et les copolymères de polyoléfine, les polyesters, le poly(chlorure de vinyle) et des mélanges quelconques de ceux-ci,
des élastomères thermoplastiques, comprenant ou représentant des élastomères de polyuréthane thermoplastiques, ou
des mélanges de ceux-ci.

2. Masterbatch selon la revendication 1, **caractérisé en ce que** le rapport en masse entre l'au moins un copolymère bloc contenant du silicium A) et l'au moins un polymère C), en particulier l'au moins un polymère thermoplastique, se situe dans la plage allant de 1:9 à 9:1, en particulier dans la plage allant de 1:7 à 1:2.

3. Masterbatch selon la revendication 1 ou 2, contenant
a) l'au moins un copolymère bloc contenant du silicium A) en une quantité inférieure à 10 % en masse, par rapport à la masse totale du masterbatch,
b) l'au moins un pigment inorganique et/ou la charge inorganique B), en particulier l'au moins un pigment inorganique, en une quantité inférieure ou égale à 80 % en masse, de préférence dans la plage de 55 à 78 % en masse, à chaque fois par rapport à la masse totale du masterbatch, et/ou, en particulier et,
c) l'au moins un polymère C), en particulier l'au moins un polymère thermoplastique, en une quantité inférieure ou égale à 35 % en masse, de préférence dans la plage de 5 à 28 % en masse, à chaque fois par rapport à la masse totale du masterbatch,
les composants formant le masterbatch s'additionnant à chaque fois à 100,0 % en masse.

4. Masterbatch selon l'une quelconque des revendications modifiées, **caractérisé en ce que**
l'au moins un copolymère bloc contenant du silicium A) est choisi dans le groupe constitué par
- un premier copolymère bloc A1) de formule générale (I)
B-[R₂-(O-Si(R₁)₂)ₙ-O-Si(R₁)₂-R₂-NH-CO-NH-R₃-NH-CO-NH]ₐ-B'
avec
R1 indépendamment l'un de l'autre, un résidu du hydrocarboné monovalent, le cas échéant substitué par fluor ou chlore, de 1 à 20 atomes de carbone,
R2 - indépendamment l'un de l'autre, - un résidu alkylène de 1 à 20 atomes de carbone, dans lequel des unités méthylène non adjacentes les unes aux autres peuvent être remplacées par des groupes -O- ou un résidu arylène de 6 à 22 atomes de carbone,
R3 un résidu alkylène, le cas échéant substitué par fluor ou chlore, de 1 à 20 atomes de carbone, dans lequel des unités méthylène non adjacentes les unes aux autres peuvent être remplacées par des groupes -O- ou un résidu arylène de 6 à 22 atomes de carbone,
B, B' un groupe terminal réactif ou non réactif, qui est lié par covalence au polymère,
n : un nombre de 1 à 10000, de préférence dans la plage de 75 à 215, de manière particulièrement préférée dans la plage de 80 à 200 et en particulier dans la plage de 100 à 180 ou 110 à 160, et
a : un nombre d'au moins 1, de préférence dans la plage de ou entre 1 et 140, de manière particulièrement préférée dans la plage de 5 à 100 et en outre de préférence dans la plage de 10 à 50 ;
un deuxième copolymère bloc A2) de formule générale (II)
B-[R²-(O-Si(R¹)₂)ₙ-O-Si(R¹)₂-R²-NH-CO-NH-R³-NH-CO-V-R⁴-W-CO-NH-R³-NH-CO-NH]ₐ-B'
avec
R1 indépendamment l'un de l'autre, un résidu du hydrocarboné monovalent, le cas échéant substitué par fluor ou chlore, de 1 à 20 atomes de carbone,
R2 - indépendamment l'un de l'autre - un résidu alkylène de 1 à 20 atomes de carbone, dans lequel des unités méthylène non adjacentes les unes aux autres peuvent être remplacées par des groupes -O- ou un résidu arylène de 6 à 22 atomes de carbone,
R3 un résidu alkylène, le cas échéant substitué par fluor ou chlore, de 1 à 20 atomes de carbone, dans lequel des unités méthylène non adjacentes les unes aux autres peuvent être remplacées par des groupes -O- ou un résidu arylène de 6 à 22 atomes de carbone,
R4 un résidu alkylène, le cas échéant substitué par fluor, chlore, alkyle en C1-C6 ou ester d'alkyle en C1-C6 , de 1 à 700 atomes de carbone, dans lequel des unités méthylène non adjacentes les unes aux autres peuvent être remplacées par des groupes -O-, -COO-, -OCO- ou -OCOO-,
V, W indépendamment l'un de l'autre, -O- ou -NR5-, R5 étant hydrogène, un résidu alkyle de 1 à 10 atomes de carbone ou un résidu aryle de 6 à 22 atomes de carbone,
B, B' : un groupe terminal réactif ou non réactif, qui est lié par covalence au polymère,
n : un nombre de 1 à 10000, de préférence dans la plage de 75 à 215, de manière particulièrement préférée dans la plage de 80 à 200 et en particulier de 100 à 180 ou 110 à 160,
a : un nombre d'au moins 1, de préférence dans la plage de ou entre 1 et 140, de manière particulièrement préférée dans la plage de 5 à 100 et en outre de préférence dans la plage de 10 à 50,
et
- des mélanges quelconques des copolymères blocs A1) et A2).

5. Masterbatch selon l'une quelconque des revendications modifiées, **caractérisé en ce que**
la proportion de composant A) est inférieure ou égale à 12,0 % en masse, de préférence inférieure ou égale à 10,0 % en masse et de manière particulièrement préférée inférieure ou égale à 8,0 % en masse, à chaque fois par rapport à la masse totale du masterbatch, et/ou, en particulier et, **en ce que** la proportion de l'au moins un pigment inorganique et/ou de la charge inorganique B), en particulier de l'au moins un pigment inorganique, se situe dans la plage allant de 60 à 80 % en masse, par rapport à la masse totale du masterbatch, et/ou **en ce que**
la proportion de l'au moins un polymère C) se situe dans la plage allant de 15 à 25 % en masse, par rapport à la masse totale du masterbatch,
les composants formant le masterbatch donnant toujours 100,0 % en masse.

6. Masterbatch selon l'une quelconque des revendications modifiées, **caractérisé en ce que**
l'homopolymère de polyoléfine comprend ou représente du polypropylène et/ou du polyéthylène, ou **en ce que**
les élastomères de polyuréthane thermoplastiques comprennent ou représentent, en particulier représentent, des élastomères de polyuréthane thermoplastiques à base de polyester-polyols ou de polyéther-polyols.

7. Masterbatch selon l'une quelconque des revendications modifiées, **caractérisé en ce que**
le polymère thermoplastique est choisi dans le groupe constitué par le polypropylène, le polyéthylène, de préférence le polyéthylène LD et de manière particulièrement préférée le polyéthylène HD, et des mélanges quelconques de ceux-ci.

8. Masterbatch selon l'une quelconque des revendications 4 à 7, **caractérisé en ce que** pour les copolymères blocs de formule (I) et/ou (II) "n" se situe dans la plage allant de 80 à 200, de préférence dans la plage allant de 100 à 180 et de manière particulièrement préférée dans la plage allant de 110 à 160, et/ou en particulier et, **en ce que**
pour les copolymères blocs de formule (I) et/ou (II) "a" se situe dans la plage allant de 5 à 100 et de préférence dans la plage allant de 10 à 50.

9. Masterbatch selon l'une quelconque des revendications 4 à 8, **caractérisé en ce que** pour les copolymères blocs de formule (I) et/ou (II) "n" se situe dans la plage allant de 100 à 180 et "a" se situe dans la plage allant de 5 à 100 ou dans la plage allant de 10 à 50, de préférence dans la plage allant de 10 à 50, de préférence "n" se situant dans la plage allant de 110 à 160 et "a" se situant dans la plage allant de 5 à 100 ou dans la plage allant de 10 à 50 et de manière particulièrement préférée "n" se situant dans la plage allant de 110 à 160 et "a" se situant dans la plage allant de 10 à 50.

10. Matériau polymère, constitué par ou contenant
i) le masterbatch selon l'une quelconque des revendications modifiées en une quantité mineure et
ii) un polymère de matrice en une quantité majeure.

11. Matériau polymère selon la revendication 10, **caractérisé en ce que** le polymère de matrice selon ii) et le polymère C) du masterbatch coïncident.

12. Matériau polymère selon la revendication 10 ou 11, **caractérisé en ce que** le matériau de matrice est choisi dans le groupe constitué par les homopolymères et les copolymères de polyoléfine, en particulier le polypropylène et/ou le polyéthylène, les polyesters, le polyoxyméthylène, le poly(chlorure de vinyle), les élastomères de polyuréthane thermoplastiques, en particulier à base de polyester-polyols ou de polyéther-polyols, et des mélanges quelconques de ceux-ci.

13. Matériau polymère selon l'une quelconque des revendications 10 à 12, **caractérisé en ce que**
la proportion du masterbatch est inférieure ou égale à 7,0 % en masse, de préférence inférieure ou égale à 5,0 % en masse, et de manière particulièrement préférée dans la plage allant de 0,5 à 3,0 % en masse, par rapport à la masse totale du matériau polymère.

14. Matériau polymère selon l'une quelconque des revendications 10 à 13, **caractérisé en ce que**
la proportion de composant A) dans le matériau polymère est inférieure ou égale à 0,8 % en masse, de préférence inférieure ou égale à 0,6 % en masse et de manière particulièrement préférée inférieure ou égale à 0,4 % en masse, par rapport à la masse totale du matériau polymère,
et/ou, en particulier et, **en ce que**
la proportion de l'au moins un pigment inorganique et/ou de la charge inorganique B), en particulier de l'au moins un pigment inorganique, se situe dans la plage allant de 0,5 à 6,0 % en masse, en particulier dans la plage allant de 1,0 à 4,0 % en masse, par rapport à la masse totale du matériau polymère,
les composants formant le matériau polymère donnant toujours 100,0 % en masse.

15. Matériau polymère selon l'une quelconque des revendications 10 à 14, **caractérisé en ce que**
le polymère de matrice comprend ou représente, en particulier représente, du polypropylène ou du polyéthylène, de préférence du polyéthylène LD et de manière particulièrement préférée du polyéthylène HD, et le polymère C) du masterbatch comprend ou représente, en particulier représente, du polypropylène ou du polyéthylène, de préférence du polyéthylène LD et de manière particulièrement préférée du polyéthylène HD.

16. Matériau polymère selon la revendication 15, **caractérisé par** une quantité dans la plage allant de 96,0 à 99,9 % en masse, de préférence dans la plage allant de 98,0 à 99,5 % en masse, du polymère de matrice de polypropylène ou de polyéthylène, de préférence de polyéthylène LD et de manière particulièrement préférée de polyéthylène HD, par rapport à la masse totale du polymère de matrice et du polymère C), et/ou, en particulier et, une quantité dans la plage allant de 0,1 à 4,0 % en masse, de préférence dans la plage allant de 0,5 à 2,0 % en masse, de polypropylène ou de polyéthylène, de préférence de polyéthylène LD et de manière particulièrement préférée de polyéthylène HD, en tant que polymère C) du masterbatch.

17. Matériau polymère selon l'une quelconque des revendications 10 à 16, comprenant en outre
des substances fibreuses choisies dans le groupe constitué par les fibres minérales, les fibres plastiques, le coton, les fibres de cellulose, les fibres de viscose, les fibres naturelles, en particulier les fibres de bois, et des mélanges quelconques de celles-ci, en particulier les fibres naturelles telles que les fibres de bois, et/ou des additifs particulaires provenant de matières premières renouvelables, en particulier choisis dans le groupe constitué par les écorces de riz, les écorces de tournesol, les particules de bois et des mélanges quelconques de celles-ci, de préférence les particules de bois.

18. Matériau polymère selon l'une quelconque des revendications 10 à 17, **caractérisé en ce que** les substances fibreuses présentent une longueur de fibre moyenne dans la plage allant de 100 à 4500 µm, en particulier dans la plage allant de 500 à 3000 µm, et/ou **en ce que** les additifs particulaires provenant de matières premières renouvelables présentent une taille de particule moyenne dans la plage allant de 100 à 500 µm, en particulier dans la plage allant de 200 à 400 µm.

19. Corps moulés, obtenus ou pouvant être obtenus par moulage par injection, extrusion, moulage par compression, rotation de cylindres, moulage par rotation, frittage au laser, modélisation par dépôt en fusion (FDM), granulation et/ou coulée du matériau polymère selon l'une quelconque des revendications 10 à 18.

20. Utilisation du masterbatch selon l'une quelconque des revendications 1 à 9 pour la coloration de matériaux polymères ou de corps moulés.
